# EUROPEAN PATENT SPECIFICATION

(11) **EP 2 492 163 B1**
(45) Date of publication and mention of the grant of the patent: **15.12.2021**
(21) Application number: 12154657.6
(22) Date of filing: 09.02.2012
(51) Int. Cl.: B60W 40/08, B60W 30/095, B60K 31/00, B60K 31/18, B60R 16/023, B60W 40/09, G07C 5/00, G07C 5/08, B60W 50/00, B60W 50/14

(54) **System and method for assessment of queue driving**
System und Verfahren zur Beurteilung der Queue-Ansteuerung
Système et procédé d'évaluation de commande de file d'attente

(30) Priority: 28.02.2011 SE 1150180
(43) Date of publication of application: 29.08.2012
(73) Proprietor: Scania CV AB, 151 87 Södertälje (SE)
(72) Inventor: Sandberg, Tony, 645 44 Strängnäs (SE); Ah-King, Joseph, 15160 Södertälje (SE); Dellrud, Jan, 640 50 Björnlunda (SE); Johansson, Anders, 146 31 Tullinge (SE)
(74) Representative: Scania CV AB

(56) References cited:
- WO-A1-2010/051414
- WO-A1-2011/013216
- US-A1- 2010 023 223
- None

## Description

### Field of the invention

The present invention relates to a system, a method, and a computer programme product for assessing a driver's anticipation when driving in a queue. The invention is defined by the independent claims.

### Background to the invention

There is continuously ongoing work with a view to reducing vehicle costs. The way the driver drives a vehicle very greatly influences inter alia vehicle wear and fuel consumption. When queues form, the driver's ability to drive with good anticipation and thereby reduce the number of brakings and accelerations makes a very great difference to fuel consumption and vehicle wear.

Using a cruise control makes it possible for the vehicle to be driven with anticipation relative to a vehicle in front. US 6324465 describes a cruise control for automatically controlling the distance between the vehicle in front in the same lane and the host vehicle, and compares it with a reference value in order thereafter to automatically set the host vehicle's speed. US 6554090 describes a cruise control which automatically ensures that the vehicle's speed is adjusted to the distance between it and some other selected object, e.g. another vehicle. The cruise control may switch between different cruise control modes in order to approach an object ahead at different speeds or to maintain a constant distance from the object.

WO 2010/051414 describes a method for advising a driver of a vehicle including determining a speed of the vehicle, determining a distance between the vehicle and another vehicle, and activating a haptic driver interface based on the speed and distance.

WO 2011/013216 describes a method for collaborative vehicle selection that selects other vehicles traveling in front of and behind the own vehicle as cooperative vehicles. A distance between the cooperating vehicle and the own vehicle is selected, and at least one of a speed of the cooperative vehicle and a speed of the host vehicle is controlled, thereby controlling a traffic volume of the road around the cooperating vehicle and the host vehicle.

US 2010/023223 describes an adaptive vehicle control system that classifies a driver's driving style based on characteristic curve-handling maneuvers and road and traffic conditions.

US 6941216 describes a cruise control which can cause a vehicle to maintain a predetermined distance from a vehicle in front on the basis of radar signals received. To correctly identify that an object ahead is a vehicle which the host vehicle's speed should be adapted to, the cruise control monitors when the driver effects one of a set of predetermined actions which may indicate an intention to reduce or increase the vehicle's speed. This information is used in conjunction with object recognition to achieve safer identification of objects ahead.

JP 07-072246 describes a vehicle-mounted collision-preventing warning device for automatically setting safety distances from a vehicle in front according to each driver's ability. The safety distance from the vehicle in front which is set depends on how quickly the driver acts. When the driver does not brake in time according to the device, he/she is sent a warning signal.

To encourage and teach drivers to adopt correct driving behaviour in order to reduce vehicle costs and also enhance safety, assessment systems have been developed for assessing driver behaviour in different driving situations. In a queuing situation, the driver's behaviour cannot be assessed in isolation from surrounding traffic, since it depends primarily on how the speed of the vehicle in front changes. Preventing sudden halts and accelerations is more difficult if the vehicle moves forward jerkily.

The object of the present invention is to propose a system and method which are intended to improve a driver's driving behaviour when queuing and which take particularly into account what surrounding vehicles are doing.

### Summary of the invention

The object described above is achieved by a system for assessing a driver's anticipation when driving a vehicle in a traffic queue. The system comprises a first status unit adapted to determining a set of first vehicle parameters related to at least the speed of another vehicle, and generating on the basis thereof a first status signal S₁₁, and a second status unit adapted to determining a set of second vehicle parameters related to at least the speed of the host vehicle and generating on the basis thereof a second status signal S₂₁. The system comprises also an assessment unit adapted to comparing said first and second status signals, to assessing the driver's anticipation in the traffic queue on the basis of the comparison according to predetermined rules and to generating an assessment signal S_{B} which denotes the driver's anticipation. The system is adapted to determine said vehicle parameters over a predetermined period, and further to determine the strength of retardations and/or accelerations of respective vehicles over said period, whereupon the assessment unit is adapted to comparing the strength of their said retardations and/or accelerations over the period and to assessing the anticipation of the host vehicle's driver in the traffic queue on the basis of the comparison according to predetermined rules.

According to another aspect, the object is achieved by a method for assessment of the driver's anticipation when driving a vehicle in a traffic queue, which method comprises:
- determining at least one set of first vehicle parameters related to at least the speed of another vehicle, and generating on the basis thereof a first status signal S₁₁;
- determining a set of second vehicle parameters related to at least the speed of the host vehicle, and generating on the basis thereof a second status signal S₂₁;
- comparing said first and second status signals;
- assessing the driver's anticipation in the traffic queue on the basis of the comparison according to predetermined rules;
- generating an assessment signal S_{B} which denotes the driver's anticipation in the traffic queue,
- determining said vehicle parameters over a predetermined period,
- determining the strength of retardations and/or accelerations of respective vehicles over said period;
- comparing the strength of their said retardations and/or accelerations over the period, and
- assessing the anticipation of the host vehicle's driver in the traffic queue on the basis of the comparison according to predetermined rules.

Measuring variations in the speed of a vehicle in front or behind and comparing them with variations in the speed of the host vehicle makes it possible to form a picture of whether the driver drives with good anticipation taking surrounding traffic into account. Driving for example with fewer and smaller speed variations than vehicles in front should according to an embodiment result in a good rating for anticipation. Driving for example with more and greater speed variations than a vehicle behind indicates that the driver drives unnecessarily jerkily and may therefore rate less well for anticipation.

The assessment may for example be fed back to the driver to indicate whether his/her driving behaviour in the queue is safe and energy-saving.

The assessment of his/her queue driving may also be used in conjunction with other assessments to do a driving style analysis of the driver.

Preferred embodiments are described in the dependent claims and the detailed description.

### Brief description of the attached drawings

The invention is described below with reference to the attached drawings, in which:
Figure 1 depicts a system for assessing a driver's anticipation when driving a vehicle in a traffic queue according to an embodiment of the invention.
Figure 2 illustrates a traffic queue with a number of vehicles and examples of vehicle parameters.
Figure 3 schematically illustrates examples of acceleration and retardation during a period of time for the host vehicle and a vehicle in front.
Figure 4 is a flowchart for the method an embodiment of the invention.

### Detailed description of preferred embodiments of the invention

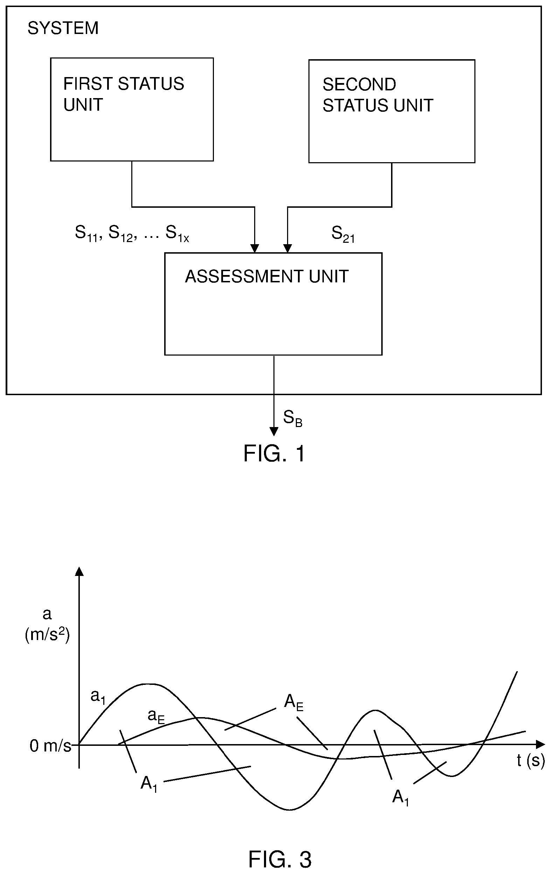

Figure 1 is a block diagram for the system according to an embodiment of the invention. The system may be implemented in a vehicle, e.g. in the vehicle in which the driver's driving behaviour is to be assessed, referred to herein as the host vehicle, or in a structure external to any vehicle. The system may also be implemented partly in the vehicle and partly in an external structure.

Another vehicle here means a vehicle in front or behind of the host vehicle in a traffic queue. It is however implicit that the assessment and rating of the driver's anticipation in the queue may also or instead be based on vehicle parameters from vehicles behind.

The system comprises a first status unit adapted to determining a set of first vehicle parameters related to at least the speed of another vehicle and generating on the basis thereof a first status signal S₁₁. The first status unit comprises preferably one or more from among a radar unit, a camera unit, a laser unit, a unit for V2V communication (vehicle-to-vehicle communication) or a unit for V2I communication (vehicle-to/from-infrastructure communication) in order to be able to determine the vehicle parameters. The first status signal S₁₁ may therefore comprise for example an individual speed parameter from a vehicle in front or behind detected by radar, camera or laser, or a complex signal conveying speed variations of vehicles in front or behind over a period of time and received by V2V or V2I communication. In appropriate cases the first status unit also comprises object identification means for identifying one or more other vehicles on the basis of signals picked up. The set of vehicle parameters may also comprise an identification parameter which identifies the other vehicle, e.g. sequential numbering of vehicles in front or behind relative to the host vehicle, or a unique identification parameter for the particular vehicle.

The first status unit may be adapted to determining first vehicle parameters related to a number of other vehicles and generating on the basis thereof a number of first status signals S₁₁, S₁₂... S₁ₓ. This makes it possible for the assessment to take into account how a number of other vehicles in front or behind behave and how the driver of the host vehicle reacts to them.

The system comprises also a second status unit adapted to determining a set of second vehicle parameters related to at least the speed of the host vehicle and generating on the basis thereof a second status signal S₂₁. The vehicle parameters may for example be existing parameter signals on the host vehicle's CAN (controller area network) system, e.g. the vehicle's speed, or parameters detected in the vehicle such as the respective positions of speed pedals and brake pedals. The second status unit may according to an embodiment comprise the same units as the first status unit, and also object identification means.

The system further comprises an assessment unit adapted to comparing said first and second status signals, assessing the driver's anticipation in the traffic queue on the basis of the comparison according to predetermined rules, and generating an assessment signal S_{B} which denotes the driver's anticipation in the traffic queue. This makes it possible to assess the driver's anticipation and behaviour in the traffic queue. The rules may for example comprise various threshold values for the status signals, depending on the characteristics of the signals. According to an embodiment, the assessment unit is adapted to rating the driver's anticipation in the situation according to predetermined rating criteria, said rating being indicated by said assessment signal S_{B}. The assessment signal may for example be fed back to the driver via the instrument panel in the form of a score on a scale of 0-10, where 10 means very good queue driving and 0 very bad queue driving, or in the form of symbols. The assessment signal may also or instead be sent to a central unit for further analysis. This system achieves a way of improving a driver's driving behaviour when queuing, taking particularly into account what surrounding vehicles are doing.

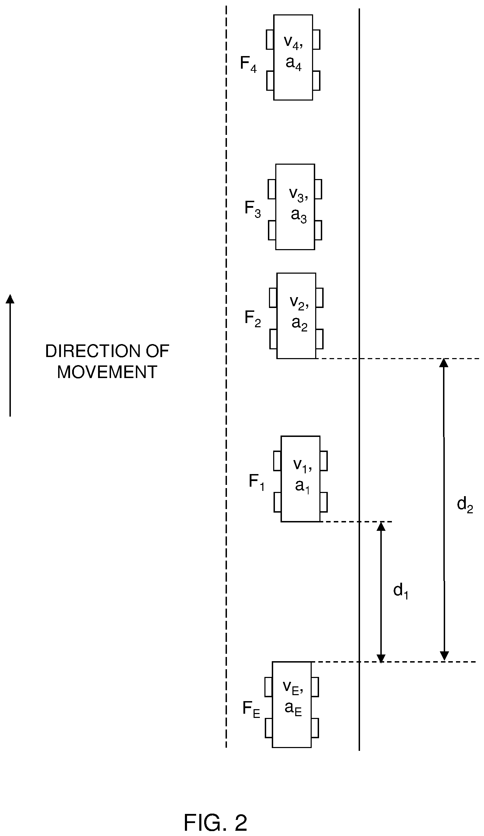

Figure 2 illustrates an example of a traffic queue, in which F_{E} represents the host vehicle and F₁-F₄ represent four vehicles in front, a_{E} and a₁-a₄ represent their respective vehicles' acceleration and retardation, and v_{E} and v₁-v₄ their respective speeds. d₁ represents the relative distance between vehicles F_{E} and F₁, and d₂ the relative distance between vehicles F_{E} and F₂. a_{E} and v_{E} are examples of other vehicle parameters determined by the second status unit, and a₁-a₄, v₁-v₄, d₁ and d₂ are all examples of first vehicle parameters determined by the first status unit.

The system is adapted to determining the vehicle parameters over a predetermined period of time. The period may for example be an acceleration or speed period for a vehicle in front or behind, or a predetermined period of time comprising a number of speed variations of the vehicle. The period may also be a predetermined length of road.

Figure 3 illustrates acceleration and retardation parameters determined over a period of time, in which a_{E} represents vehicle F_{E}'s acceleration and retardation, and a₁ vehicle F₁'s acceleration and retardation. Here it may be seen that vehicle F_{E} partly follows vehicle F₁'s changes of acceleration and retardation, but in an anticipatory way such that the acceleration and retardation of vehicle F_{E} do not vary as much or as often as those of vehicle F₁. This is an example of good queue driving by the driver of vehicle F_{E}.

The system is adapted to determining the strength of retardations and/or accelerations of respective vehicles over said period of time, whereupon the assessment unit is adapted to comparing the strength of said retardations and/or accelerations of the vehicles over the same period and assessing the anticipation of the host vehicle's driver in the traffic queue on the basis of the comparison according to predetermined rules. These strengths may for example be determined by measurement of the amplitude of the vehicles' retardations and accelerations.

According to another embodiment, the system is adapted to determining the number of retardations and/or accelerations of respective vehicles over said period, whereupon the assessment unit is adapted to comparing their numbers of retardations and/or accelerations over the period and to assessing the anticipation of the host vehicle's driver in the traffic queue on the basis of the comparison according to predetermined rules. In the example depicted in Figure 3, vehicle F₁ accelerates three times and retards twice. Vehicle F_{E} accelerates twice and retards once, i.e. less often than vehicle F₁. A smaller number of accelerations and/or retardations of the host vehicle than a vehicle in front may be assessed as good driving behaviour by its driver in the traffic queue. By comparing the number of accelerations and/or retardations of vehicles F₁ and F_{E}, the assessment unit will thus in this case conclude that the driver of vehicle F_{E} shows good anticipation in the queue. According to this embodiment, said rules therefore comprise rules about the number of accelerations and/or retardations of the host vehicle relative to the number of accelerations and/or retardations of vehicles in front. There may also be rules for the number of accelerations and/or retardations of the host vehicle relative to the number of accelerations and/or retardations of vehicles behind.

The system may also take simultaneously into account in its assessment both the strength and the number of retardations and/or accelerations as above. This makes it possible, for example, to compare a driver who over a period accelerates and retards strongly, albeit not so often, with a driver who accelerates and retards less strongly but more often over the same period. The latter driver may then have better driving behaviour from the vehicle wear and/or fuel perspective, since the vehicle will run at a more even speed which does not vary so much. An even speed is therefore generally desirable in queue driving.

The system is adapted according to an embodiment to determining measurements of energy used by respective vehicles over said period. Measurements of energy used may for example be calculated in each vehicle and sent by V2V or V2I to the system's assessment unit for comparison and assessment. The areas A₁ and A_{E} between the curves and the time axis in Figure 3 illustrate the respective speed variations of vehicles F₁ and F_{E}. They may be regarded as a measurement of the energy used and be themselves used for comparison. The assessment is further adapted to determining said measurements of energy used by vehicles over the period and to assessing the anticipation of the host vehicle's driver in the traffic queue on the basis of the comparison according to predetermined rules. The driver's anticipation and behaviour in the traffic queue may thus also be assessed with regard to how much energy is used when driving. The driver of the host vehicle F_{E} will have a good rating by driving his/her vehicle with less energy consumption than vehicles in front. He/she may also have a poorer rating by driving his/her vehicle with more energy consumption than vehicles behind.

To drive a vehicle safely, particularly in queue driving, it is important to maintain a certain distance from a vehicle in front. Figure 2 illustrates some distances from vehicles in front, represented by d₁ and d₂. To be able to cater for distances from vehicles in front, said set of first vehicle parameters also comprises according to an embodiment the position of the vehicle in front, and generating a first status signal which also conveys said position parameters. The assessment is then adapted to determining a relative distance d between the vehicle in front and the host vehicle and to assessing the anticipation of the host vehicle's driver in the traffic queue on the basis of the distance d according to predetermined rules. The position of the vehicles in front may for example be determined by detection by any of the previously enumerated units which may be present in the first status unit. The vehicle in front may also itself keep track of its position, e.g. by means of a GPS (global positioning system) unit, and send it to the first status unit by V2V communication or V2I communication. The second status unit may also comprise a GPS unit for keeping track of its position, which may then be compared with the position of the vehicle in front in order to arrive at the distance between the vehicles.

According to an embodiment, the system is adapted to determining an average for speed variations of a number of other vehicles (in front or behind) on the basis of said first status signals S₁₁, S₁₂....S₁ₓ. An average for the speed variations may be determined by taking an average of measured areas between acceleration and retardation curves and time axes of the other vehicles over a period, as described in relation to Figure 3. The assessment is then adapted to comparing the host vehicle's speed variations with said average and assessing its driver's anticipation in the traffic queue on the basis of the comparison according to predetermined rules. This makes it possible for the assessment to know whether the host vehicle's driver has taken into account more vehicles than the nearest vehicle in front, designated F₁ in Figure 2, or the nearest vehicle behind.

The system may also be adapted to taking other parameters into account, e.g. temperature, ice on carriageways and/or weather when assessing the driver's anticipation in queue driving. In this case said predetermined rules also comprise rules for these parameters. For example, the driver may achieve a better rating if he/she maintains more distance from vehicles in front in below-zero temperatures or heavy rain than in better conditions. For distances, the rules may therefore comprise limit values which vary depending on the vehicles' speeds and/or prevailing temperature etc.

When a vehicle in front makes a lane change and is perhaps quickly replaced by another vehicle from a different lane, the host vehicle may be forced to brake to allow enough space for the newcomer. This may be difficult for the host vehicle's driver to anticipate and may adversely affect the assessment of his/her queue behaviour despite his/her having been unable to anticipate the situation. According to an embodiment, the system is therefore adapted to monitoring when a vehicle in front makes a lane change and is replaced by a vehicle from an adjacent lane, a situation in which the assessment then disregards the driver's behaviour.

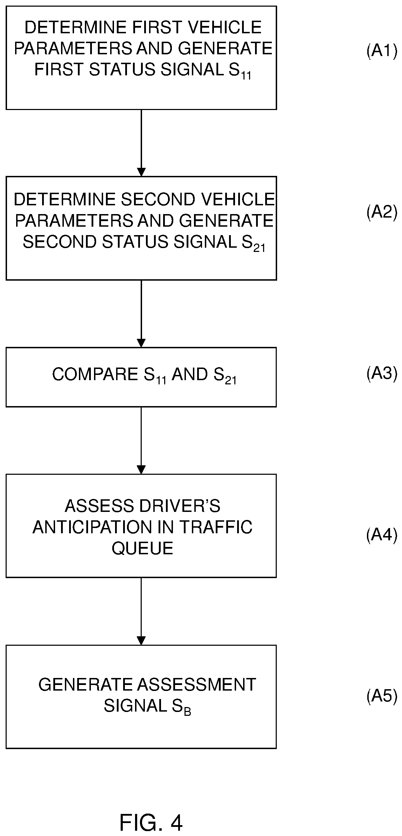

The invention comprises also a method for assessment of a driver's anticipation when driving in a traffic queue, which method will now be explained with reference to Figure 4. The method comprises a first step A1 of determining a set of first vehicle parameters related to at least the speed of another vehicle and generating on the basis thereof a first status signal S₁₁. This is followed by determining as a second step A2 a set of second vehicle parameters related to at least the speed of the host vehicle, on the basis of which a second status signal S₂₁ is generated. As a third step A3, said first and second status signals are then compared and as a fourth step A4 the anticipation of the host vehicle's driver in the traffic queue is assessed on the basis of the comparison according to predetermined rules. As a fifth step A5, an assessment signal S_{B} denoting the driver's anticipation in the traffic queue is then generated. Said set of first vehicle parameters may also comprise the position of a vehicle in front, in which case the method comprises determining a relative distance d between the vehicle in front and the host vehicle and assessing the anticipation of the host vehicle's driver in the traffic queue on the basis of the distance d according to predetermined rules. The driver's anticipation in the traffic queue may thus also be assessed with respect to distance from vehicles in front.

The method may also comprise rating the driver's anticipation in the situation according to predetermined rating criteria, in which case said assessment signal S_{B} conveys said rating. The assessment signal may be appropriately fed back to the driver so that he/she may know how good his/her anticipation in queue driving is and be able to improve it. The method thus provides a way of improving a driver's queue driving behaviour, taking particularly into account what surrounding vehicles are doing.

The method comprises determining said vehicle parameters over a predetermined period of time. This makes it possible for example for vehicles' speed variations over the period to be determined, as illustrated in Figure 3. The method also comprises determining and comparing the strength of the respective vehicles' retardations and/or accelerations during said period. According to another embodiment, the numbers of retardations and/or accelerations are determined and compared over said period. The anticipation of the host vehicle's driver in the traffic queue may then be assessed on the basis of the respective comparisons according to predetermined rules. Said strengths and number of retardations and/or accelerations may also be assessed simultaneously, as explained in relation to the system according to the invention.

The method comprises, according to an embodiment, determining and comparing measurements of energy used by respective vehicles over said period. The anticipation of the host vehicle's driver in the traffic queue may then be assessed on the basis of the comparison according to predetermined rules.

To be able to cater for two or more vehicles in front or behind, the method comprises, according to an embodiment, determining parameters related to a number of other vehicles and generating a number of first status signals S₁₁, S₁₂...S₁ₓ which denote respective states of the vehicle detected. Determining an average for speed variations of a number of other vehicles on the basis of said first status signals S₁₁, S₁₂...S₁ₓ makes it possible to compare the host vehicle's speed variations with said average and to assess its driver's anticipation in the traffic queue on the basis of the comparison according to predetermined rules.

The invention relates also to a computer programme product provided with programme instructions to enable a computer system to perform the method of the invention. The programme instructions are preferably stored on a medium which can be read by a computer system.

## Claims

1. A system for assessing a driver's anticipation when driving a vehicle in a traffic queue, comprising
- a first status unit adapted to determining a set of first vehicle parameters related to at least the speed of another vehicle, and to generating on the basis thereof a first status signal (Sn),
- a second status unit adapted to determining a set of second vehicle parameters related to at least the speed of the host vehicle, and to generating on the basis thereof a second status signal (S₂₁);
wherein the system comprises
- an assessment unit adapted to comparing said first and second status signals, to assessing the driver's anticipation in the traffic queue on the basis of the comparison according to predetermined rules and to generating an assessment signal (S_{B}) which denotes the driver's anticipation,
wherein the system is adapted to determining said vehicle parameters over a predetermined period, and further to determining the strength of retardations and/or accelerations of respective vehicles over said period, whereupon the assessment unit is adapted to comparing the strength of their said retardations and/or accelerations over the period and to assessing the anticipation of the host vehicle's driver in the traffic queue on the basis of the comparison according to predetermined rules.

2. A system according to claim 1, in which the assessment unit is adapted to rating the driver's anticipation in the situation according to predetermined rating criteria, whereupon said assessment signal (S_{B}) conveys said rating.

3. A system according to claim 1 or 2, adapted to determining the number of retardations and/or accelerations of respective vehicles over said period, whereupon the assessment unit is adapted to comparing the numbers of their said retardations and/or accelerations over the period and to assessing the anticipation of the host vehicle's driver in the traffic queue on the basis of the comparison according to predetermined rules.

4. A system according to any one of claims 1-3, adapted to determining measurements of energy used by respective vehicles over said period, whereupon the assessment unit is adapted to comparing said measurements of energy used by them over the period and to assessing the anticipation of the host vehicle's driver in the traffic queue on the basis of the comparison according to predetermined rules.

5. A system according to any one of the foregoing claims, in which said set of first vehicle parameters comprises also the position of a vehicle in front and generating a first status signal which also conveys said position parameters, whereupon the assessment unit is adapted to determining the relative distance d between the vehicle in front and the host vehicle and to assessing the anticipation of the host vehicle's driver in the traffic queue on the basis of the distance d.

6. A system according to any one of the foregoing claims, in which the first status unit comprises one or more from among a radar unit, camera unit, laser unit, unit for V2V communication (vehicle-to-vehicle communication) or unit for V2I communication (vehicle-to/from-infrastructure communication).

7. A system according to any one of the foregoing claims, in which the first status unit is adapted to determining parameters related to a number of other vehicles and to generating a number of first status signals (S₁₁, S₁₂...S₁ₓ) which convey respective states of the vehicles detected.

8. A system according to claim 7, adapted to determining an average for speed variations of a number of other vehicles on the basis of said first status signals (S₁₁, S₁₂...S₁ₓ) whereupon the assessment unit is adapted to comparing the host vehicle's speed variations with said average and to assessing its driver's anticipation the traffic queue on the basis of the comparison according to predetermined rules.

9. A system according to any one of the foregoing claims, in which said predetermined rules comprise also rules for parameters among surrounding temperature, ice on carriageways and weather conditions, which system is adapted to taking these parameters into account in assessing the driver's anticipation in queue driving.

10. A method for assessment of a driver's anticipation when driving a vehicle in a traffic queue, comprising
- determining (A1) a set of first vehicle parameters related to at least the speed of another vehicle, and generating on the basis thereof a first status signal (S₁₁)
- determining (A2) a set of second vehicle parameters related to at least the speed of the host vehicle, and generating on the basis thereof a second status signal (S₂₁),
- comparing (A3) said first and second status signals,
- assessing (A4) the driver's anticipation in the traffic queue on the basis of the comparison according to predetermined rules,
- generating (A5) an assessment signal (S_{B}) which denotes the driver's anticipation in the traffic queue,
- determining said vehicle parameters over a predetermined period,
- determining the strength of retardations and/or accelerations of respective vehicles over said period;
- comparing the strength of their said retardations and/or accelerations over the period, and
- assessing the anticipation of the host vehicle's driver in the traffic queue on the basis of the comparison according to predetermined rules.

11. A method according to claim 10, which comprises rating the driver's anticipation in the situation according to predetermined rating criteria, whereupon said assessment signal S_{B} conveys said rating.

12. A method according to claim 10 or 11, comprising
- determining the numbers of retardations and/or accelerations of respective vehicles over said period, and
- comparing the numbers of their said retardations and/or accelerations over the period,
- assessing the anticipation of the host vehicle's driver in the traffic queue on the basis of the comparison according to predetermined rules.

13. A method according to any one of claims 10-12, comprising
- determining measurements of energy used by respective vehicles over said period,
- comparing said measurements of energy used by them over the period; and
- assessing the anticipation of the host vehicle's driver in the traffic queue on the basis of the comparison according to predetermined rules.

14. A method according to any one of claims 10-13, in which said set of first vehicle parameters comprises also the position of a vehicle in front, which method comprises
- determining the relative distance d between the vehicle in front and the host vehicle,
- assessing the anticipation of the host vehicle's driver in the traffic queue on the basis of the comparison according to predetermined rules.

15. A method according to any one of claims 10-14, comprising
- determining parameters related to a number of other vehicles and
- generating a number of first status signals (S₁₁, S₁₂...S₁ₓ) which denote respective states of the vehicles detected.

16. A method according to claim 15, comprising
- determining an average for speed variations of a number of other vehicles on the basis of said first status signals (S₁₁, S₁₂...S₁ₓ)
- comparing the host vehicle's speed variations with said average and
- assessing the anticipation of the host vehicle's driver in the traffic queue on the basis of the comparison according to predetermined rules.

17. A method according to any one of claims 10-16, comprising taking parameters among surrounding temperature, ice on carriageways and weather conditions into account when assessing the driver's anticipation in queue driving.

18. A computer programme product comprising programme instructions to enable a computer system to perform steps according to the method of any one of claims 10-17 when those instructions are run on said computer system.

## Patentansprüche

1. System zum Bewerten der Antizipation eines Fahrers beim Fahren eines Fahrzeugs in einer Verkehrsschlange, umfassend
- eine erste Statuseinheit, die geeignet ist, einen Satz von ersten Fahrzeugparametern zu bestimmen, die zumindest mit der Geschwindigkeit eines anderen Fahrzeugs zusammenhängen, und auf der Grundlage darauf ein erstes Statussignal (S₁₁) zu erzeugen,
- eine zweite Statuseinheit, die geeignet ist, einen Satz von zweiten Fahrzeugparametern zu bestimmen, die zumindest mit der Geschwindigkeit des Host-Fahrzeugs zusammenhängen, und auf der Grundlage darauf ein zweites Statussignal (S₂₁) zu erzeugen;
wobei das System umfasst
- eine Bewertungseinheit, die geeignet ist, das erste und das zweite Statussignal zu vergleichen, die Antizipation des Fahrers in der Verkehrsschlange auf der Grundlage des Vergleichs gemäß vorbestimmten Regeln zu bewerten und ein Bewertungssignal (S_{B}) zu erzeugen, das die Antizipation des Fahrers angibt,
wobei das System geeignet ist, die Fahrzeugparameter über einen vorbestimmten Zeitraum zu bestimmen und ferner die Stärke von Abbremsungen und/oder Beschleunigungen der jeweiligen Fahrzeuge über den Zeitraum zu bestimmen, woraufhin die Bewertungseinheit geeignet ist, die Stärke ihrer Abbremsungen und/oder Beschleunigungen über den Zeitraum zu vergleichen und die Antizipation des Fahrers des Host-Fahrzeugs in der Verkehrsschlange auf der Grundlage des Vergleichs gemäß vorbestimmter Regeln zu bewerten.

2. System nach Anspruch 1, bei dem die Bewertungseinheit geeignet ist, die Antizipation des Fahrers in der Situation nach vorgegebenen Bewertungskriterien zu beurteilen, woraufhin das Bewertungssignal (S_{B}) die Beurteilung übermittelt.

3. System nach Anspruch 1 oder 2, das geeignet ist, die Anzahl der Abbremsungen und/oder Beschleunigungen der jeweiligen Fahrzeuge über den Zeitraum zu bestimmen, woraufhin die Bewertungseinheit geeignet ist, die Anzahl ihrer Abbremsungen und/oder Beschleunigungen über den Zeitraum zu vergleichen und die Antizipation des Fahrers des Host-Fahrzeugs in der Verkehrsschlange auf der Grundlage des Vergleichs nach vorbestimmten Regeln zu bewerten.

4. System nach einem der Ansprüche 1-3, das geeignet ist, Messungen einer von den jeweiligen Fahrzeugen über den Zeitraum verbrauchten Energie zu bestimmen, woraufhin die Bewertungseinheit geeignet ist, die Messungen der von ihnen über den Zeitraum verbrauchten Energie zu vergleichen und die Antizipation des Fahrers des Host-Fahrzeugs in der Verkehrsschlange auf der Grundlage des Vergleichs nach vorbestimmten Regeln zu bewerten.

5. System nach einem der vorhergehenden Ansprüche, bei dem der Satz der ersten Fahrzeugparameter auch die Position eines vorausfahrenden Fahrzeugs umfasst und ein erstes Statussignal erzeugt wird, das auch die Positionsparameter übermittelt, woraufhin die Bewertungseinheit geeignet ist, den relativen Abstand d zwischen dem vorausfahrenden Fahrzeug und dem Host-Fahrzeug zu bestimmen und die Antizipation des Fahrers des Host-Fahrzeugs in der Verkehrsschlange auf der Grundlage des Abstands d zu bewerten.

6. System nach einem der vorhergehenden Ansprüche, bei dem die erste Statuseinheit eine oder mehrere Einheiten aus einer Radareinheit, Kameraeinheit, Lasereinheit, Einheit für V2V-Kommunikation (Fahrzeug-zu-Fahrzeug-Kommunikation) oder Einheit für V2I-Kommunikation (Fahrzeug-zu/von-Infrastruktur-Kommunikation) umfasst.

7. System nach einem der vorhergehenden Ansprüche, bei dem die erste Statuseinheit geeignet ist, Parameter zu bestimmen, die sich auf eine Anzahl von anderen Fahrzeugen beziehen, und eine Anzahl von ersten Statussignalen (S₁₁, S₁₂ ... S₁ₓ) zu erzeugen, die jeweilige Zustände der erfassten Fahrzeuge übermitteln.

8. System nach Anspruch 7, das geeignet ist, auf der Grundlage der ersten Statussignale (S₁₁, S₁₂ ... S₁ₓ) einen Mittelwert für Geschwindigkeitsänderungen einer Anzahl anderer Fahrzeuge zu bestimmen, woraufhin die Bewertungseinheit dazu geeignet ist, die Geschwindigkeitsänderungen des Host-Fahrzeugs mit dem Mittelwert zu vergleichen und auf der Grundlage des Vergleichs gemäß vorbestimmter Regeln zu bewerten, ob der Fahrer des Host-Fahrzeugs die Verkehrsschlange antizipiert.

9. System nach einem der vorhergehenden Ansprüche, bei dem die vorbestimmten Regeln auch Regeln für Parameter wie Umgebungstemperatur, Eis auf der Fahrbahn und Wetterbedingungen umfassen, wobei das System geeignet ist, diese Parameter bei der Bewertung der Antizipation des Fahrers beim Fahren in der Verkehrsschlange zu berücksichtigen.

10. Verfahren zur Bewertung der Antizipation eines Fahrers beim Fahren eines Fahrzeugs in einer Verkehrsschlange, umfassend
- Bestimmen (A1) eines Satzes von ersten Fahrzeugparametern, die zumindest mit der Geschwindigkeit eines anderen Fahrzeugs zusammenhängen, und auf der Grundlage darauf Erzeugen eines ersten Statussignals (S₁₁)
- Bestimmen (A2) eines Satzes von zweiten Fahrzeugparametern, die zumindest mit der Geschwindigkeit des Host-Fahrzeugs zusammenhängen, und auf der Grundlage darauf Erzeugen eines zweiten Statussignals (S₂₁),
- Vergleichen (A3) des ersten und zweiten Statussignals,
- Bewerten (A4) der Antizipation des Fahrers in der Verkehrsschlange auf der Grundlage des Vergleichs nach vorbestimmten Regeln,
- Erzeugen (A5) eines Bewertungssignals (S_{B}), das die Antizipation des Fahrers in der Verkehrsschlange anzeigt,
- Bestimmen der Fahrzeugparameter über einen bestimmten Zeitraum,
- Bestimmen der Stärke von Abbremsungen und/oder Beschleunigungen der jeweiligen Fahrzeuge über den Zeitraum;
- Vergleichen der Stärke ihrer Abbremsungen und/oder Beschleunigungen über den Zeitraum und
- Bewerten der Antizipation des Fahrers des Host-Fahrzeugs in der Verkehrsschlange auf der Grundlage des Vergleichs nach vorbestimmten Regeln.

11. Verfahren nach Anspruch 10, bei dem die Antizipation des Fahrers in der Situation nach vorbestimmten Bewertungskriterien beurteilt wird, woraufhin das Bewertungssignal S_{B} die Beurteilung übermittelt.

12. Verfahren nach Anspruch 10 oder 11, umfassend
- Bestimmen der Anzahl von Abbremsungen und/oder Beschleunigungen der jeweiligen Fahrzeuge über den Zeitraum, und
- Vergleichen der Anzahl ihrer genannten Abbremsungen und/oder Beschleunigungen über den Zeitraum,
- Bewerten der Antizipation des Fahrers des Host-Fahrzeugs in der Verkehrsschlange auf der Grundlage des Vergleichs nach vorbestimmten Regeln.

13. Verfahren nach einem der Ansprüche 10-12, umfassend
- Bestimmen von Messungen einer von den jeweiligen Fahrzeugen über den Zeitraum verbrauchten Energie,
- Vergleichen der Messungen der von diesen über den Zeitraum verbrauchten Energie; und
- Bewerten der Antizipation des Fahrers des Host-Fahrzeugs in der Verkehrsschlange auf der Grundlage des Vergleichs nach vorbestimmten Regeln.

14. Verfahren nach einem der Ansprüche 10-13, bei dem der Satz der ersten Fahrzeugparameter auch die Position eines vorausfahrenden Fahrzeugs umfasst, wobei das Verfahren umfasst
- Bestimmen des relativen Abstands d zwischen dem vorausfahrenden Fahrzeug und dem Host-Fahrzeug,
- Bewerten der Antizipation des Fahrers des Host-Fahrzeugs in der Verkehrsschlange auf der Grundlage des Vergleichs nach vorbestimmten Regeln.

15. Verfahren nach einem der Ansprüche 10-14, umfassend
- Bestimmen von Parametern, die sich auf eine Anzahl anderer Fahrzeuge beziehen und
- Erzeugen einer Anzahl von ersten Statussignalen (S₁₁, S₁₂ ... S₁ₓ), die jeweilige Zustände der erfassten Fahrzeuge angeben.

16. Verfahren nach Anspruch 15, umfassend
- Bestimmen eines Mittelwerts für Geschwindigkeitsänderungen einer Anzahl anderer Fahrzeuge auf der Grundlage der ersten Statussignale (S₁₁, S₁₂ ... S₁ₓ)
- Vergleichen der Geschwindigkeitsänderungen des Host-Fahrzeugs mit dem Mittelwert und
- Bewerten der Antizipation des Fahrers des Host-Fahrzeugs in der Verkehrsschlange auf der Grundlage des Vergleichs nach vorbestimmten Regeln.

17. Verfahren nach einem der Ansprüche 10-16, umfassend Berücksichtigen von Parametern wie Umgebungstemperatur, Eis auf der Fahrbahn und Wetterbedingungen beim Bewerten der Antizipation des Fahrers beim Fahren in der Verkehrsschlange.

18. Computerprogrammprodukt mit Programmanweisungen, die ein Computersystem in die Lage versetzen, Schritte gemäß dem Verfahren nach einem der Ansprüche 10-17 durchzuführen, wenn diese Anweisungen auf dem Computersystem ausgeführt werden.

## Revendications

1. La présente invention concerne un système pour évaluer l'anticipation d'un conducteur lorsqu'il conduit un véhicule dans une file d'attente de circulation, comprenant
- une première unité d'état adaptée pour déterminer un ensemble de premiers paramètres de véhicule liés à l'au moins la vitesse d'un autre véhicule, et pour générer sur la base de ceux-ci un premier signe d'état (S₁₁),
- une deuxième unité d'état adaptée pour déterminer un ensemble de deuxièmes paramètres de véhicule liés à l'au moins la vitesse du véhicule hôte, et pour générer sur la base de ceux-ci un deuxième signe d'état (S₂₁) ;
dans lequel le système comprend
- une unité d'évaluation adaptée pour comparer lesdits premier et deuxième signe d'état, pour évaluer l'anticipation du conducteur dans la file d'attente de circulation sur la base de la comparaison selon des règles prédéterminées et pour générer un signal d'évaluation (S_{B}) qui indique l'anticipation du conducteur,
dans lequel le système est adapté pour déterminer lesdits paramètres de véhicule sur une période prédéterminée, et en outre pour déterminer l'intensité des retards et/ou des accélérations des véhicules respectifs sur ladite période, après quoi l'unité d'évaluation est adaptée pour comparer l'intensité de leurs retards et/ou accélérations sur la période et pour évaluer l'anticipation du conducteur du véhicule hôte dans la file d'attente de circulation sur la base de la comparaison selon des règles prédéterminées.

2. Système selon la revendication 1, dans lequel l'unité d'évaluation est adaptée pour évaluer l'anticipation du conducteur dans la situation selon des critères d'évaluation prédéterminés, après quoi ledit signal d'évaluation (S_{B}) transmet ladite évaluation.

3. Système selon la revendication 1 ou 2, adapté pour déterminer le nombre de retards et/ou des accélérations des véhicules respectifs sur ladite période, après quoi l'unité d'évaluation est adaptée pour comparer le nombre de leurs retards et/ou accélérations sur la période et pour évaluer l'anticipation du conducteur du véhicule hôte dans la file d'attente de circulation sur la base de la comparaison selon des règles prédéterminées.

4. Système selon l'une quelconque des revendications 1 à 3, adapté pour déterminer les mesures d'énergie utilisée par les véhicules respectifs sur ladite période, après quoi l'unité d'évaluation est adaptée pour comparer lesdites mesures d'énergie utilisée par eux sur la période et pour évaluer l'anticipation du conducteur du véhicule hôte dans la file d'attente de circulation sur la base de la comparaison selon des règles prédéterminées.

5. Système selon l'une quelconque des revendications précédentes, dans lequel ledit ensemble de premiers paramètres de véhicule comprend également la position d'un véhicule devant et la génération d'un premier signe d'état qui transmet également lesdits paramètres de position, après quoi l'unité d'évaluation est adaptée pour déterminer la distance relative d entre le véhicule devant et le véhicule hôte et pour évaluer l'anticipation du conducteur du véhicule hôte dans la file d'attente de circulation sur la base de la distance d.

6. Système selon l'une quelconque des revendications précédentes, dans lequel la première unité d'état comprend une ou plusieurs unités parmi une unité de radar, une unité de caméra, une unité de laser, une unité de communication V2V (communication entre véhicules) ou une unité de communication V2I (communication entre véhicules et infrastructures).

7. Système selon l'une quelconque des revendications précédentes, dans lequel la première unité d'état est adaptée pour déterminer des paramètres liés à un certain nombre d'autres véhicules et pour générer un certain nombre de premiers signes d'état (S₁₁, S₁₂...S₁ₓ) qui transmettent des états respectifs des véhicules détectés.

8. Système selon la revendication 7, adapté pour déterminer une moyenne des variations de vitesse d'un certain nombre d'autres véhicules sur la base desdits premiers signes d'état (S₁₁, S₁₂...S₁ₓ), après quoi l'unité d'évaluation est adaptée pour comparer les variations de vitesse du véhicule hôte avec ladite moyenne et pour évaluer l'anticipation de la file d'attente de circulation par son conducteur sur la base de la comparaison selon des règles prédéterminées.

9. Système selon l'une quelconque des revendications précédentes, dans lequel lesdites règles prédéterminées comprennent également des règles pour des paramètres parmi la température ambiante, la glace sur les chaussées et les conditions météorologiques, lequel système est adapté pour prendre en compte ces paramètres dans l'évaluation de l'anticipation du conducteur dans la conduite en file d'attente.

10. Système pour l'évaluation d el'anticipation d'un conducteur lorsqu'il conduit un véhicule dans une file d'attente de circulation, comprenant
- la détermination (A1) d'un ensemble de premiers paramètres de véhicule liés à l'au moins la vitesse d'un autre véhicule, et la génération sur la base de ceux-ci un premier signe d'état (S₁₁)
- la détermination (A2) d'un ensemble de seconds paramètres de véhicule liés à l'au moins la vitesse d'un véhicule hôte, et la génération sur la base de ceux-ci un second signe d'état (S₂₁),
- la comparaison (A3) desdits premier et deuxième signes d'état,
- l'évaluation (A4) de l'anticipation du conducteur dans la file d'attente de circulation sur la base de la comparaison selon des règles prédéterminées,
- la génération (A5) d'un signal d'évaluation (S_{B}) qui indique l'anticipation du conducteur dans la file d'attente de circulation,
- la détermination desdits paramètres du véhicule sur une période prédéterminée,
- la détermination de la force des ralentissements et/ou des accélérations des véhicules respectifs pendant ladite période ;
- la comparaison de la force de leurs dits retards et/ou accélérations sur la période, et
- l'évaluation de l'anticipation du conducteur du véhicule hôte dans la file d'attente de circulation sur la base de la comparaison selon des règles prédéterminées.

11. Procédé selon la revendication 10, qui comprend l'évaluation de l'anticipation du conducteur dans la situation selon des critères d'évaluation prédéterminés, après quoi ledit signal d'évaluation S_{B} transmet ladite évaluation.

12. Procédé selon la revendication 10 ou 11, comprenant
- la détermination du nombre des ralentissements et/ou des accélérations des véhicules respectifs pendant ladite période ; et
- la comparaison du nombre de leurs dits retards et/ou accélérations sur la période,
- l'évaluation de l'anticipation du conducteur du véhicule hôte dans la file d'attente de circulation sur la base de la comparaison selon des règles prédéterminées.

13. Procédé selon l'une quelconque des revendications 10 à 12, comprenant
- la détermination des mesures d'énergie utilisées par les véhicules respectifs sur ladite période,
- la comparaison desdites mesures d'énergie utilisées par eux sur la période ; et
- l'évaluation de l'anticipation du conducteur du véhicule hôte dans la file d'attente de circulation sur la base de la comparaison selon des règles prédéterminées.

14. Procédé selon l'une quelconque des revendications 10 à 13, dans lequel ledit ensemble de premiers paramètres du véhicule comprend également la position d'un véhicule à l'avant, lequel procédé consiste à
- la détermination de la distance relative d entre le véhicule précédent et le véhicule hôte,
- l'évaluation de l'anticipation du conducteur du véhicule hôte dans la file d'attente de circulation sur la base de la comparaison selon des règles prédéterminées.

15. Procédé selon l'une quelconque des revendications 10 à 14, comprenant
- la détermination de paramètres liés à un nombre d'autres véhicules et
- la génération d'un certain nombre de premiers signaux d'état (S₁₁, S₁₂...S₁ₓ) qui indiquent les états respectifs des véhicules détectés.

16. Procédé selon la revendication 15, comprenant
- la détermination d'une moyenne pour des variations de vitesse d'un certain nombre d'autres véhicules sur la base desdits premiers signes d'état (S₁₁, S₁₂... S₁ₓ)
- la comparaison des variations de vitesse du véhicule hôte avec ladite moyenne et
- l'évaluation de l'anticipation du conducteur du véhicule hôte dans la file d'attente de circulation sur la base de la comparaison selon des règles prédéterminées.

17. Procédé selon l'une quelconque des revendications 10 à 16 comprenant également la prise en compte de paramètres parmi la température ambiante, la glace sur les chaussées et les conditions météorologiques lors de l'évaluation de l'anticipation du conducteur dans la conduite en file d'attente.

18. Produit de programme comprenant des instructions de programme informatique pour permettre à un système informatique d'exécuter des étapes du procédé selon l'une quelconque des revendications 10 à 17 lorsque ces instructions sont exécutées sur ledit système informatique.
